# FASCICULE DE BREVET EUROPEEN

(11) **EP 1 893 399 B1**
(45) Date de publication et mention de la délivrance du brevet: **01.08.2018**
(21) Numéro de dépôt: 06778962.8
(22) Date de dépôt: 21.06.2006
(51) Int. Cl.: B29C 70/24

(54) **STRUCTURE FIBREUSE DE RENFORT POUR PIECE EN MATERIAU COMPOSITE ET PIECE LA COMPORTANT**
VERSTÄRKENDES FASERGEBILDE FÜR EINEN VERBUNDWERKSTOFF SOWIE DAS FASERGEBILDE ENTHALTENDES BAUTEIL
REINFORCING FIBROUS STRUCTURE FOR A COMPOSITE MATERIAL AND A PART CONTAINING SAID STRUCTURE

(30) Priorité: 24.06.2005 FR 0506441
(43) Date de publication de la demande: 05.03.2008
(73) Titulaire: Safran Aircraft Engines, 75015 Paris (FR); Safran Ceramics, 33185 Le Haillan (FR)
(72) Inventeur: COUPE, Dominique, F-33185 Le Haillan (FR); DAMBRINE, Bruno, F-77820 Le Chatelet En Brie (FR); MAHIEU, Jean Noel, F-75014 Paris (FR); BOUILLON, Eric, F-33185 Le Haillan (FR); CHARLEUX, François, F-33000 Bordeaux (FR)
(74) Mandataire: Delumeau, François Guy
(86) Numéro de dépôt international: PCT/FR2006/050617
(87) Numéro de publication internationale: WO 2006/136755

(56) Documents cités:
- EP-A- 0 439 274
- EP-A- 1 526 285
- GB-A- 2 299 379

## Description

### Arrière-plan de l'invention

L'invention concerne la réalisation de pièces en matériau composite et plus particulièrement la réalisation de structures fibreuses de renfort pour de telles pièces.

Un domaine d'application de l'invention est la réalisation de pièces de structure en matériau composite à renfort fibreux et matrice résine. De telles pièces sont utilisées dans de très nombreux domaines, notamment dans le domaine aéronautique. Un exemple particulier est la réalisation d'aubes pour turbomachines, notamment d'aubes de soufflante. La densification de la structure fibreuse de renfort par la matrice résine est réalisée par tout moyen connu, par exemple par moulage avec transfert de résine (procédé RTM pour "Resin Transfer Moulding").

Un autre domaine d'application de l'invention est la réalisation de pièces en matériau composite thermostructural, c'est-à-dire en un matériau ayant des propriétés mécaniques qui le rendent apte à constituer des éléments de structures et ayant la capacité de conserver ces propriétés à des températures élevées. Des matériaux composites thermostructuraux sont typiquement les matériaux composites carbone/ carbone (C/C) ayant un renfort fibreux en carbone densifié par une matrice en carbone, et les matériaux composites à matrice céramique (CMC) ayant un renfort fibreux réfractaire (carbone ou céramique) densifié par une matrice céramique. Des pièces en matériau composite thermostructural sont utilisées notamment dans les domaines aéronautique et spatial. La densification de la structure fibreuse de renfort par le matériau constitutif de la matrice peut être réalisée par infiltration chimique en phase gazeuse (ou CVI pour "Chemical Vapor Infiltration") ou par voie liquide, comme cela est bien connu en soi. La densification par voie liquide consiste à imprégner la structure fibreuse par une composition liquide contenant un précurseur du matériau constitutif de la matrice, typiquement une résine, la transformation du précurseur étant réalisée par traitement thermique.

Pour des pièces en matériau composite présentant une certaine épaisseur, il est connu de réaliser la structure fibreuse de renfort en plusieurs couches superposées liées entre elles pour éviter une décohésion entre couches, en particulier de réaliser une structure de renfort par tissage tridimensionnel.

Ainsi, il a été proposé dans le document EP 1 526 285 de réaliser une structure de renfort, ou préforme, pour une aube de turbomachine, en particulier une aube de soufflante, par tissage tridimensionnel de type interlock avec évolution de l'armure de tissage en direction longitudinale entre le pied et la pale de l'aube.

Divers aspects doivent être pris en considération pour la réalisation de structures fibreuses de renfort pour des pièces en matériau composite.

Ainsi, dans le cas de pièces en matériau composite devant présenter un état de surface lisse, il est souhaitable d'éviter que la structure fibreuse de renfort présente des irrégularités de surface importantes qui nécessitent des opérations supplémentaires, telles qu'un arasage de la surface, par exemple après un premier stade de densification, ou stade de consolidation, pour éliminer de telles irrégularités, ou un ajout en surface d'une strate bidimensionnelle, par exemple une strate de tissu, avant la fin de la densification.

En outre, dans le cas de pièces en matériau composite à matrice résine, la présence d'irrégularités de surface notables se traduit par la formation d'amas localisés de résine qui nuisent aux propriétés mécaniques des pièces.

Par ailleurs, dans le cas où la pièce en matériau composite est obtenue par densification de la structure fibreuse de renfort par infiltration chimique en phase gazeuse (ou CVI, pour "Chemical Vapor Infiltration"), il est souhaitable de ménager un accès aisé à la phase gazeuse jusqu'au coeur de la structure fibreuse et de faire en sorte que celle-ci présente une porosité relativement uniforme pour réaliser une densification aussi peu inhomogène que possible. En effet, en cas de difficultés d'accès au sein de la porosité de la structure fibreuse, ou en présence de pores de tailles très différentes, les pores les plus petits étant obturés plus rapidement, un fort gradient de densification est inévitable qui affecte les propriétés du matériau composite.

Enfin, dans le cas de pièces en matériau composite présentant des parties minces, comme c'est le cas par exemple des bords de fuite de pales d'aubes pour turbomachines, il est souhaitable de conserver une structure tridimensionnelle jusque dans ces parties minces tout en préservant une continuité structurale avec les parties plus épaisses, afin de conférer aux pièces des propriétés mécaniques attendues.

La structure fibreuse selon le préambule de la revendication 1 est connue du document EP-A-0 439 274.

### Objet et résumé de l'invention

L'invention vise à proposer une structure fibreuse de renfort tissée en une seule pièce, destinée à la fabrication de pièce en matériau composite et capable de répondre à au moins certaines de ces contraintes.

Ce but est atteint grâce à une structure fibreuse de renfort comprenant une partie interne, ou coeur, et une partie adjacente à une surface extérieure de la structure, ou peau, la structure fibreuse étant formée par un tissage tridimensionnel à coeur avec au moins une armure choisie parmi une armure interlock et une armure multicouches et par un tissage en peau avec une armure de type satin.

Dans tous les cas, la texture fibreuse est tissée en une seule pièce, toutes les couches étant liées entre elles par le tissage tridimensionnel à coeur seul ou en combinaison avec un tissage multicouches en peau.

Selon les propriétés souhaitées de la structure fibreuse, différentes combinaisons d'armures entre les parties de coeur et de peau peuvent être prévues.

Ainsi, la structure fibreuse peut être formée par un tissage tridimensionnel avec au moins une armure interlock à coeur et un tissage avec une armure de type satin en peau.

Lorsque la structure fibreuse est densifiée par CVI pour obtenir une pièce en matériau composite, une armure interlock à coeur permet de ménager un accès plus aisé à la phase gazeuse au coeur de la préforme.

Le tissage en peau avec une armure de type satin permet de limiter les irrégularités de surface. Dans le cas d'une densification par résine, on évite la formation d'amas de résine en surface comme on peut l'observer avec une armure interlock telle que celle du document précité EP 1 526 285, les irrégularités de surface étant relativement importantes. Le tissage en peau peut être un tissage bidimensionnel, auquel cas le tissage avec armure interlock assure la liaison des couches entre elles jusque dans la partie de peau, ou un tissage multicouches.

Selon d'autres modes de réalisation, la structure fibreuse peut être formée par un tissage multicouches à coeur et un tissage multicouches en peau différente de l'armure à coeur, ou être formée par un tissage avec une armure multicouches à coeur et un tissage bidimensionnel en peau.

Dans un autre mode particulier de réalisation, la partie de coeur peut comprendre une première partie formée par tissage avec une première armure et au moins une deuxième partie située entre la première partie et la peau, la deuxième partie étant formée par tissage tridimensionnel avec une deuxième armure différente de la première.

La première et la deuxième armures peuvent être des armures interlock ou les armures de tissage multicouches. Dans ce dernier cas, la première et la deuxième armures peuvent par exemple être des armures multi-satin de pas différents. Il est possible aussi que l'une des première et deuxième armures soit une armure interlock et l'autre une armure de tissage multicouches.

Le choix du mode de tissage tridimensionnel à coeur et du tissage en peau pourra être déterminé par des propriétés souhaitées en termes de taux de fibres dans la texture (pourcentage du volume apparent de la texture occupé effectivement par les fibres), de perméabilité des couches, de déformabilité de la structure fibreuse et/ou de tenue mécanique dans le plan des couches ou perpendiculairement à celles-ci.

Par ailleurs, on peut faire varier l'une au moins des contextures en chaîne et en trame entre le coeur et la peau, par exemple en diminuant la contexture entre le coeur et la peau pour ménager un accès plus aisé à la phase gazeuse à travers la peau et vers le coeur lorsque la structure fibreuse doit être densifiée par CVI.

On peut aussi faire varier le titre des fils entre le coeur et la peau, par exemple pour respecter des limites souhaitées pour la valeur du rapport de taux de fibres entre chaîne et trame et du taux de fibres global.

Selon une particularité, la structure fibreuse a au moins une partie d'épaisseur réduite avec deux couches de fils de trame et formée par un tissage tridimensionnel avec une armure de type interlock liant les deux couches de trame et par un tissage bidimensionnel à armure de type satin liant les fils de chaque couche de trame.

Selon une autre particularité, la structure fibreuse a une partie d'épaisseur réduite avec trois couches de fils de trame et formée par un tissage tridimensionnel avec une armure de type interlock liant les trois couches de trame, et la couche de fils de trame centrale est en outre liée à chacune des deux autres par tissage multicouches à armure de type satin.

Selon encore une autre particularité, la structure fibreuse a une partie de transition entre une première partie et une deuxième partie ayant une couche complète de fils de trame supplémentaire par rapport à la première partie, la partie de transition ayant une couche partielle supplémentaire de fils de trame par rapport à la première partie. Les fils de trame de la couche partielle supplémentaire peuvent être disposés entre deux couches complètes de fils de trame et liés à celles-ci par un tissage avec une armure interlock.

Avec ces particularités, il est possible de ménager une continuité du tissage tridimensionnel jusque dans des parties très minces d'une structure fibreuse, comme par exemple des parties de préformes fibreuses d'aubes de turbomachine correspondant aux bords de fuite des pales.

On pourra en outre former les parties différentes de la structure fibreuse avec des fils de natures chimiques différentes afin de leur conférer des propriétés particulières souhaitées, notamment de résistance à l'usure ou à l'oxydation.

L'invention vise aussi une pièce en matériau composite ayant une structure fibreuse de renfort en matériau telle que définie ci-avant densifiée par une matrice, que ce soit une pièce en matériau composite à matrice résine, en particulier, une aube de turbomachine, ou une pièce en matériau composite thermostructural.

### Brève description des dessins

L'invention sera mieux comprise à la lecture de la description faite ci-après en référence aux dessins annexés sur lesquels :
- les figures 1 à 3 illustrent un plan d'armures de tissage tridimensionnel interlock et multicouches ;
- les figures 4A à 4H représentent les différents plans successifs d'armure d'une structure fibreuse combinant une armure interlock à coeur et une armure toile en peau ;
- les figures 5A à 5H représentent les différents plans successifs d'armure d'une structure fibreuse selon un mode de réalisation de l'invention combinant une armure interlock à coeur et une armure satin en peau ; - les figures 6A à 6J et 7A à 7H représentent partiellement les différents plans successifs d'armure d'une structure fibreuse selon deux autres modes de réalisation de l'invention combinant une armure interlock à coeur et une armure multi-satin en peau ;
- les figures 8A à 8J représentent partiellement les différents plans successifs d'armure d'une structure fibreuse selon un autre mode de réalisation de l'invention combinant une armure interlock à coeur et une armure satin en peau ;
- les figures 9A à 9T et 10AA à 10BN représentent partiellement les différents plans successifs d'armure d'une structure fibreuse selon deux autres modes de réalisation de l'invention combinant différentes armures interlock à coeur ;
- les figures 11A et 11B représentent partiellement deux plans d'armure d'une structure fibreuse selon un autre mode de réalisation combinant un tissage multicouches à armure de type toile et un tissage à armure interlock à coeur ;
- les figures 12A à 12D représentent les plans successifs d'armure d'une partie de structure fibreuse à deux couches de trame, selon une particularité de l'invention ;
- les figures 13A à 13H représentent les plans successifs d'armure d'une partie de structure fibreuse à trois couches de trames selon une autre particularité de l'invention ;
- les figures 14A à 14D représentent les plans d'armure d'une partie de transition entre les parties de structure fibreuse des figures 12A-12D et 13A-13H, selon une particularité de l'invention ;
- les figures 15A à 15H représentent des plans successifs d'armure d'une partie de transition entre la partie de structure fibreuse des figures 13A à 13H et une partie de structure fibreuse d'épaisseur augmentée d'une couche complète de fils de trame, selon une particularité de l'invention ; et
- la figure 16 est une photographie montrant en partie une structure fibreuse selon un mode de réalisation de l'invention constituant une préforme d'aube de turbomachine.

### Définitions

Par "tissage bidimensionnel" ou "tissage 2D", on entend ici un mode de tissage classique par lequel chaque fil de chaîne passe d'un côté à l'autre de fils d'une seule couche de trame.

Par "tissage tridimensionnel" ou "tissage 3D", on entend ici un mode de tissage par lequel certains au moins des fils de chaîne lient des fils de trame sur plusieurs couches de trame.

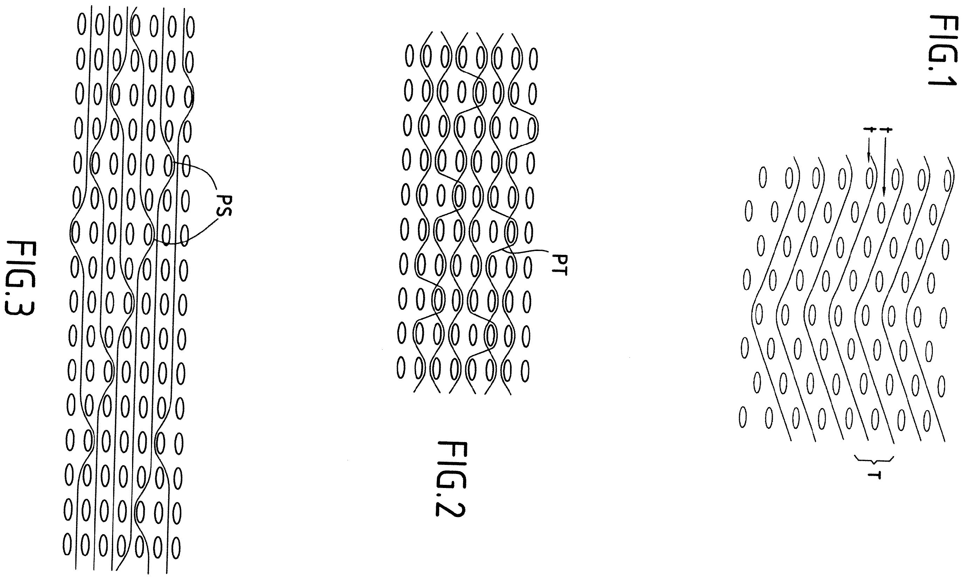

Par "tissage interlock", on entend ici une armure de tissage 3D dont chaque couche de chaîne lie plusieurs couches de trames avec tous les fils de la même colonne de chaîne ayant le même mouvement dans le plan de l'armure. La figure 1 est une vue d'un de 8 plans d'une armure interlock à 7 couches de chaîne et 8 couches de trame. Dans l'armure interlock illustrée, une couche de trame T est formée de deux demi-couches de trame t adjacentes décalées l'une par rapport à l'autre dans le sens chaîne. On a donc 16 demi-couches de trame positionnées en quinconce. Chaque chaîne lie 3 demi-couches de trame. Dans ce qui suit, le terme "couche" pourra être utilisé pour désigner une couche complète ou une demi-couche de fils de trame, sauf indication contraire.

On pourrait aussi adopter une disposition en trame non en quinconce, les fils de trame de deux couches de trame voisines étant alignés sur des mêmes colonnes.

Par "tissage multicouches", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles. La figure 2 montre un plan de tissu multicouches de type toile, ou "tissu multi-toile" dans lequel des fils de chaîne sont de temps en temps déviés de leur trajet de toile 2D classique associé à une trame pour saisir un fil d'une trame voisine et former des points de toile particuliers PT liant deux couches de trame voisines. Au niveau d'un point de toile particulier PT, le fil de chaîne passe autour de deux fils de trame situés sur une même colonne dans deux couches de trame voisines.

La figure 3 montre un plan d'un tissu multicouches de type satin, ou "tissu multi-satin", dans laquelle chaque fil de chaîne est dévié alternativement dans un sens et dans l'autre pour saisir un fil de trame sur n d'une première couche de fils de trame et un fil de trame sur n d'une deuxième couche de fils de trame adjacente à la première, n étant un nombre entier supérieur à 2 réalisant ainsi une liaison entre deux couches. Dans l'exemple illustré, n = 16.

Dans une armure de type satin, le "pas" désigne l'intervalle entre deux points de satin d'un même fil de chaîne mesuré en nombre de colonnes de trame. Dans le cas de la figure 3, un tel pas est alternativement de 6 et de 10, donnant un pas de multi-satin moyen de 8, soit n/2.

Dans les armures, des figures 2 et 3, les fils de trame ne sont pas disposés en quinconce, les fils de trame de deux couches voisines de fils de trame étant alignés sur des mêmes colonnes. On pourra toutefois avoir une disposition trame en quinconce comme dans le cas de la figure 1, les liaisons étant réalisées entre deux demi-couches de trame voisines.

On notera qu'une liaison par un même fil de chaîne dans une armure multi-toile ou multi-satin n'est pas limitée à deux couches de trame voisines mais peut s'étendre sur une profondeur de plus de deux couches de trame.

Par "contexture", on désigne ici le nombre de fils par unité de longueur en sens trame et en sens chaîne, une contexture faible (ou lâche) signifiant un moins grand nombre de fils, donc un tissu plus ouvert par opposition avec une contexture élevée (ou serrée).

Dans tout le texte qui suit et dans tous les dessins, il est mentionné et représenté par convention et souci de commodité, que ce sont les fils de chaîne qui sont déviés de leurs trajets pour saisir des fils de trame d'une couche de trame ou de plusieurs couches de trames. Toutefois, une inversion des rôles entre chaîne et trame est possible, et doit être considérée comme couverte aussi par les revendications.

### Description détaillée de modes de réalisation de l'invention

Le domaine d'application de l'invention est celui de la réalisation de structures fibreuses aptes à constituer des renforts fibreux, ou préformes, pour la fabrication de pièces en matériau composite, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que carbone ou céramique dans le cas de composites thermostructuraux.

La réalisation de la structure fibreuse par tissage 3D permet d'obtenir une liaison entre les couches, donc d'avoir une bonne tenue mécanique de la structure fibreuse et de la pièce en matériau composite obtenue, en une seule opération textile.

Il est avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou coeur, et une partie externe, ou peau adjacente à une surface extérieure de la structure fibreuse, la peau est réalisée par tissage avec une armure de type satin procurant un aspect de surface lisse.

Il peut être souhaitable de faire varier le titre des fils utilisés pour le tissage de la structure fibreuse, en particulier en utilisant des fils de titres différents entre coeur et peau et/ou entre chaîne et trame. Les titres des fils peuvent notamment être choisis pour obtenir un rapport dans des limites souhaitées entre le taux volumique de fibres en chaîne et le taux volumique de fibres en trame.

Il est avantageux aussi pour obtenir des propriétés mécaniques aussi peu inhomogènes que possible au sein d'une pièce en matériau composite, de favoriser une densification de la structure fibreuse de renfort, avec un gradient de densification aussi faible que possible entre le coeur de la structure fibreuse et la peau de celle-ci, notamment dans le cas de densification CVI. A cet effet, pour favoriser l'accès au coeur de la préforme, le tissage à coeur peut être réalisé par tissage interlock, qui offre une communication aisée entre plusieurs couches de tissu.

On peut aussi réaliser le coeur et la peau par tissage multicouches avec des armures différentes.

Egalement dans le but de favoriser l'accès au coeur de la structure fibreuse lors de la densification, la peau peut être réalisée avec une contexture plus faible que celle du coeur.

Il est possible aussi de faire varier l'armure de tissage tridimensionnel dans la partie de coeur, par exemple en combinant différentes armures interlock, ou une armure interlock et une armure de tissage multicouches, ou encore différentes armures de tissage multicouches.

Il peut être souhaitable de faire varier le titre des fils utilisés pour le tissage de la structure fibreuse, en particulier en utilisant des fils de titres différents entre coeur et peau et/ou entre chaîne et trame. Un titre de fils décroissant entre coeur et peau favorise l'accès à coeur du gaz à travers la peau dans le cas de densification CVI. Les titres des fils peuvent aussi être choisis pour obtenir un rapport dans les limites souhaitées entre le taux volumique de fibres en chaîne et le taux volumique de fibres en trame.

Il peut être souhaitable en outre d'utiliser des fils de natures chimiques différentes entre différentes parties de la structure fibreuse, notamment entre coeur et peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une préforme avec des fibres carbone dans le coeur et des fibres en céramique, par exemple en carbure de silicium (SiC), en peau afin d'accroître la résistance à l'usure de la pièce composite au niveau de cette partie de peau.

Des exemples de réalisation d'une structure fibreuse conformément à l'invention seront maintenant décrits. Dans tous ces exemples, le tissage est réalisé sur un métier de type Jacquard.

### Exemple 1 (non couvert par les revendications)

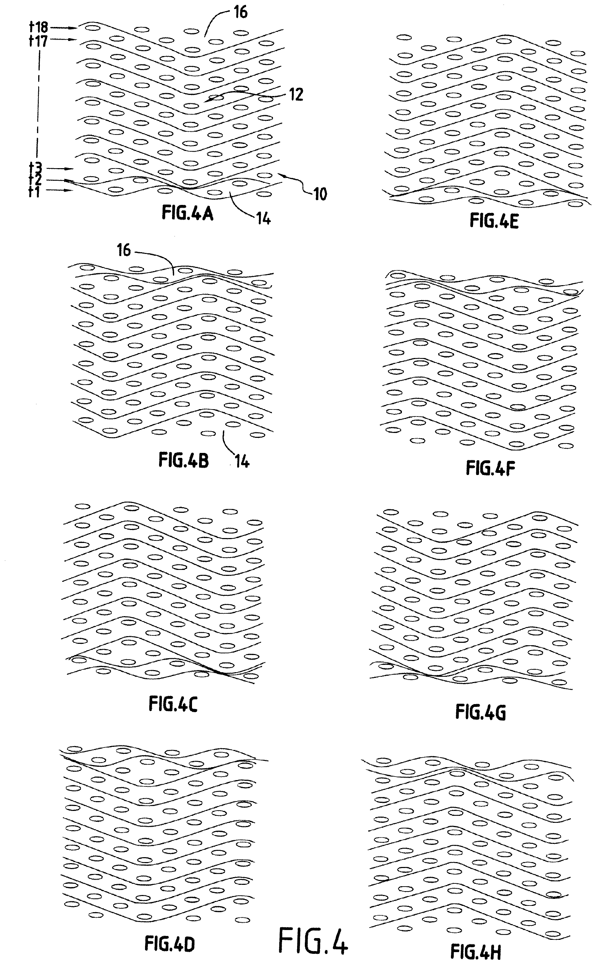

Les figures 4A à 4H représentent partiellement 8 plans successifs d'une armure d'une structure fibreuse obtenue par tissage 3D, les fils de trame étant visibles en coupe.

La structure fibreuse 10 comprend 9 couches de fils de trame, soit 18 demi-couches t1 à t18. Dans le coeur 12 situé entre les peaux opposées 14, 16, le tissage 3D est de type interlock avec une contexture 10/10 par couche (10 fils par cm en trame et en chaîne). Dans les peaux, 14, 16, le tissage est bidimensionnel avec armure de type toile avec une contexture 5/5 par couche. Le tissage toile ne concerne que les demi-couches t1 et t2 et les demi-couches t17 et t18 de fils de trame. On notera que le tissage 3D interlock du coeur s'étend jusqu'aux demi-couches extrêmes t1, t18 des peaux afin de lier ces demi-couches à celles du coeur.

Dans cet exemple, le mode de tissage et la contexture varient entre coeur et peaux. Le tissage toile en peau est favorable pour obtenir un état de surface relativement lisse. En cas de densification par CVI, le tissage 3D interlock au coeur est favorable pour minimiser un gradient de densification entre peau et coeur, tandis qu'une contexture plus faible dans les peaux favorise l'accès au coeur de la structure fibreuse à travers les peaux.

### Exemple 2

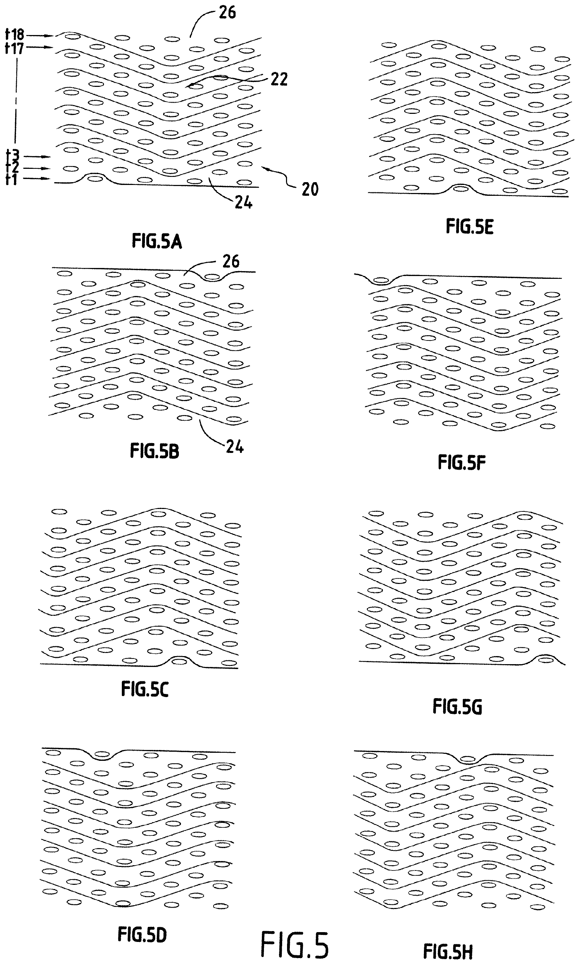

Les figures 5A à 5H représentent des plans successifs d'une armure d'une structure fibreuse 20 obtenue par tissage 3D, cette structure différant de celle de l'exemple 1 en ce que, dans les peaux 24, 26, le tissage est à armure satin avec une contexture 5 x 5 et ne concerne que les demi-couches extrêmes de fils de trame t1 et t18, le tissage à coeur 22 étant de type interlock avec une contexture 10 × 10 par couche.

Dans cet exemple, le mode de tissage varie entre coeur 22 et peaux 24, 26, le tissage satin en peau donnant un aspect de surface lisse.

### Exemple 3

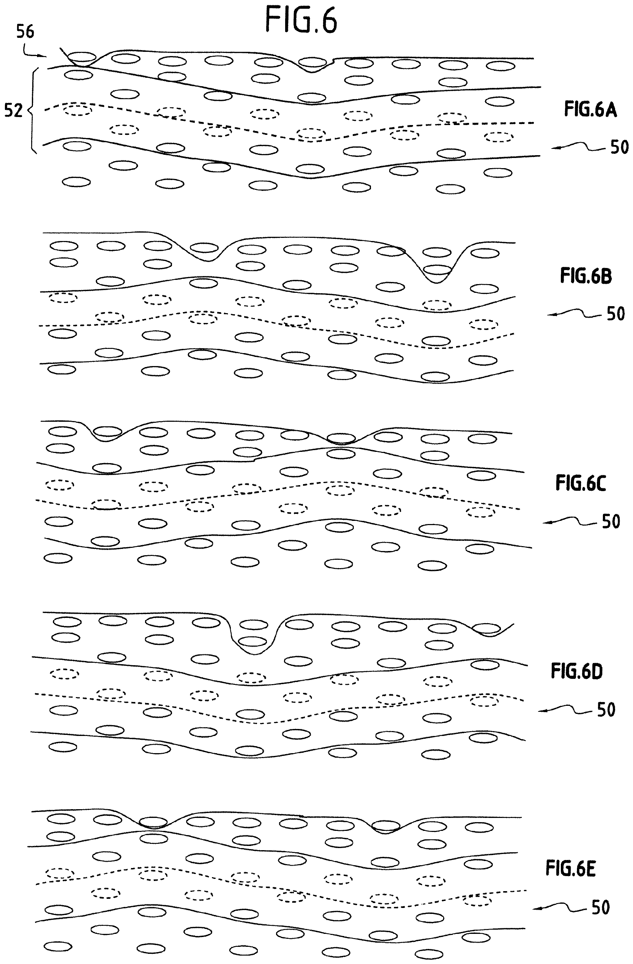

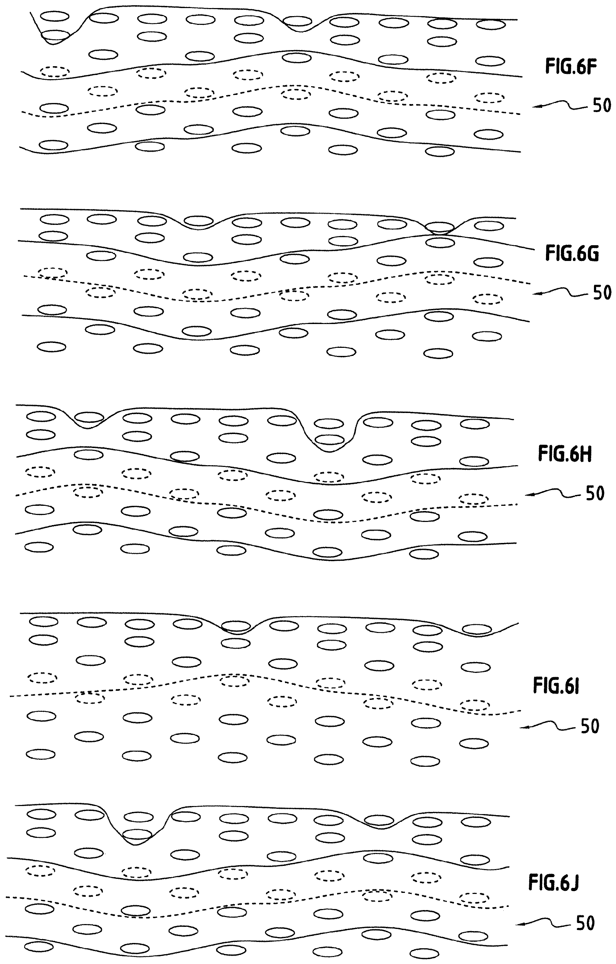

Les figures 6A à 6J représentent partiellement des plans successifs d'une structure fibreuse 50 obtenue par tissage 3D, avec tissage interlock à coeur 52 et tissage multicouches en peau. Le tissage interlock est réalisé avec chaque fil de chaîne s'étendant sur une profondeur de 2 demi-couches de fils de trame. Le tissage multicouches en peau 56 est réalisé avec une armure de type multi-satin ayant un pas de 5 qui réunit une couche de trame externe formée de deux demi-couches et une demi-couche de trame adjacente.

Une partie seulement de l'armure est représentée, le nombre de couches de trame pouvant être augmenté comme symbolisé par des tirets, et la peau opposée à la peau 56 n'étant pas représentée, le tissage dans cette peau opposée pouvant être du même type que dans la peau 56.

### Exemple 4

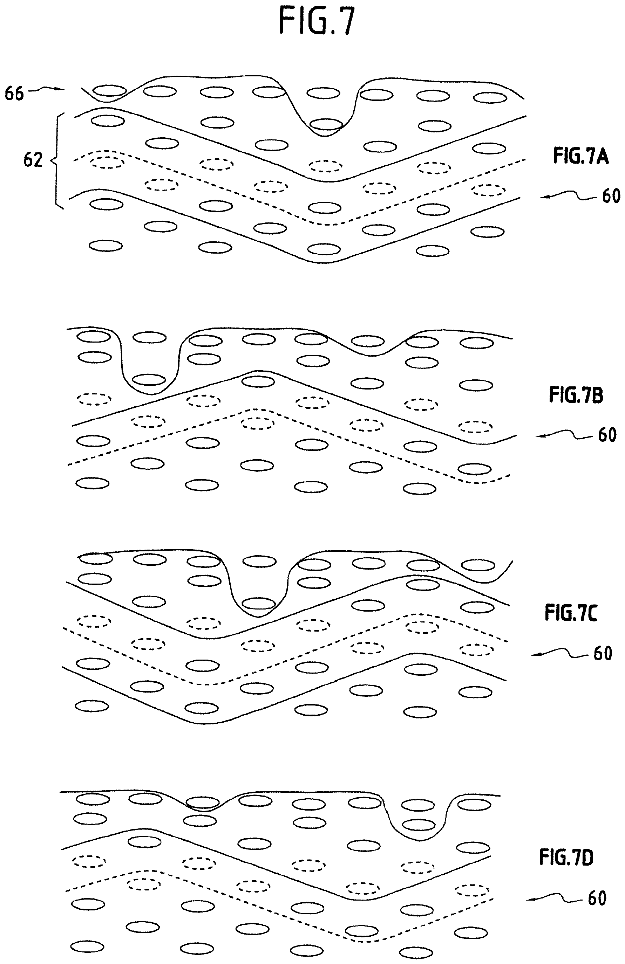

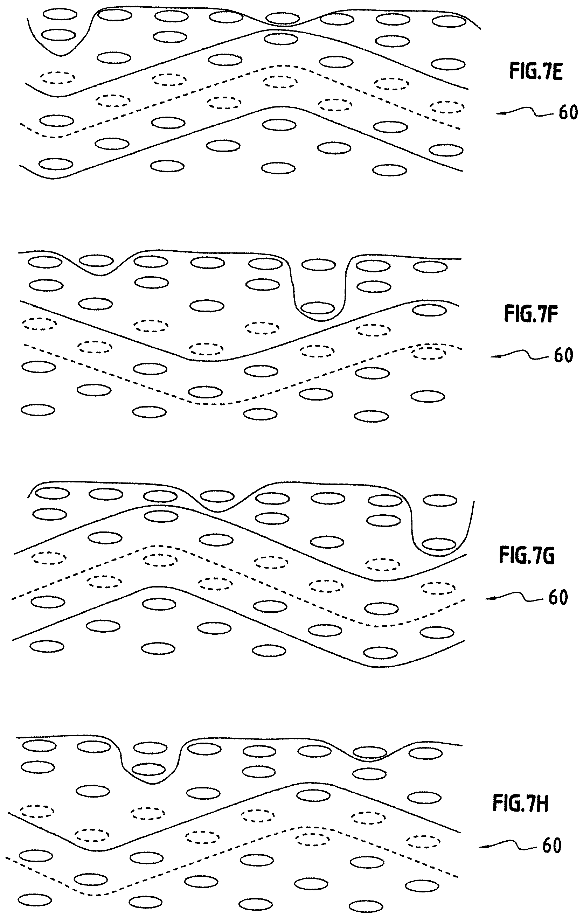

Les figures 7A à 7H représentent partiellement des plans successifs d'une structure fibreuse 60 obtenue par tissage 3D selon une variante de l'exemple 3, le tissage interlock à coeur 62 s'étendant sur 3 demi-couches de fils de trame au lieu de 2, et l'armure de tissage en peau 66 étant un tissage multi-satin avec un pas de 4. L'armure de tissage en peau s'étend, sur la couche externe de fils de trame, formée de deux demi-couches réunies, et, alternativement, sur l'une et sur l'autre des demi-couches voisines de fils de trame voisines de la couche externe

### Exemple 5

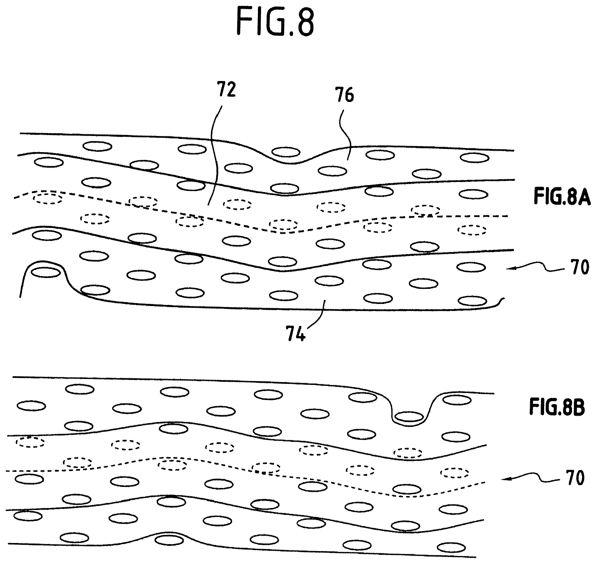

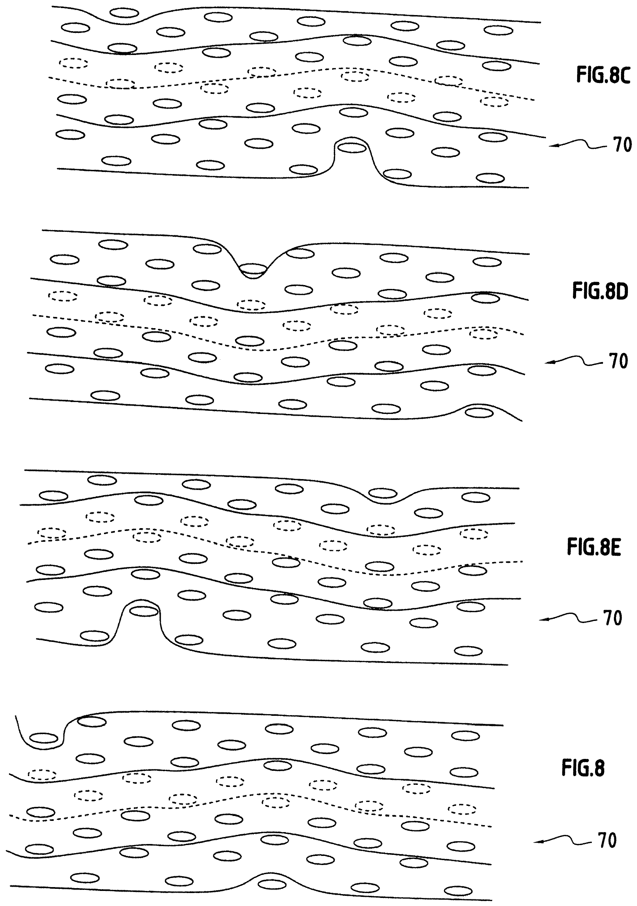

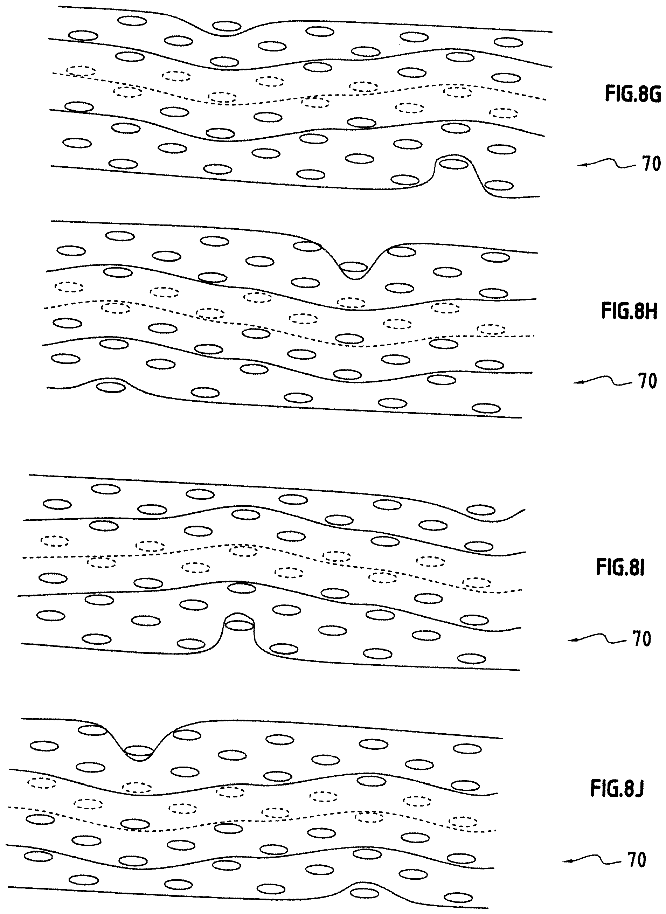

Les figures 8A à 8J représentent des plans successifs d'une armure de structure fibreuse 70 obtenue par tissage 3D avec tissage tridimensionnel à armure interlock à coeur 72 et tissage satin de pas 10 en peaux 74, 76.

Les fils de trame sont disposés en quinconce. Le nombre de demi-couches de trame à coeur peut être augmenté comme symbolisé par des tirets.

Le tissage interlock à coeur est sur deux demi-couches et le tissage satin en peau est également sur deux demi-couches, la demi-couche externe en peau n'étant pas concernée par le tissage interlock du coeur.

### Exemple 6

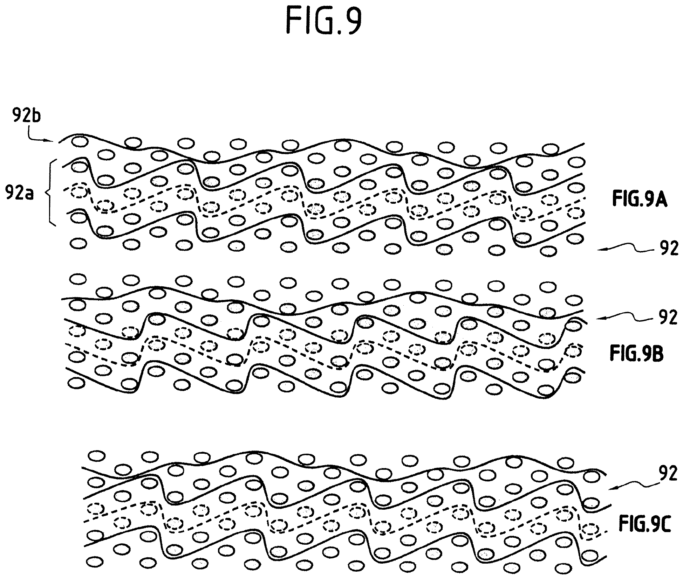

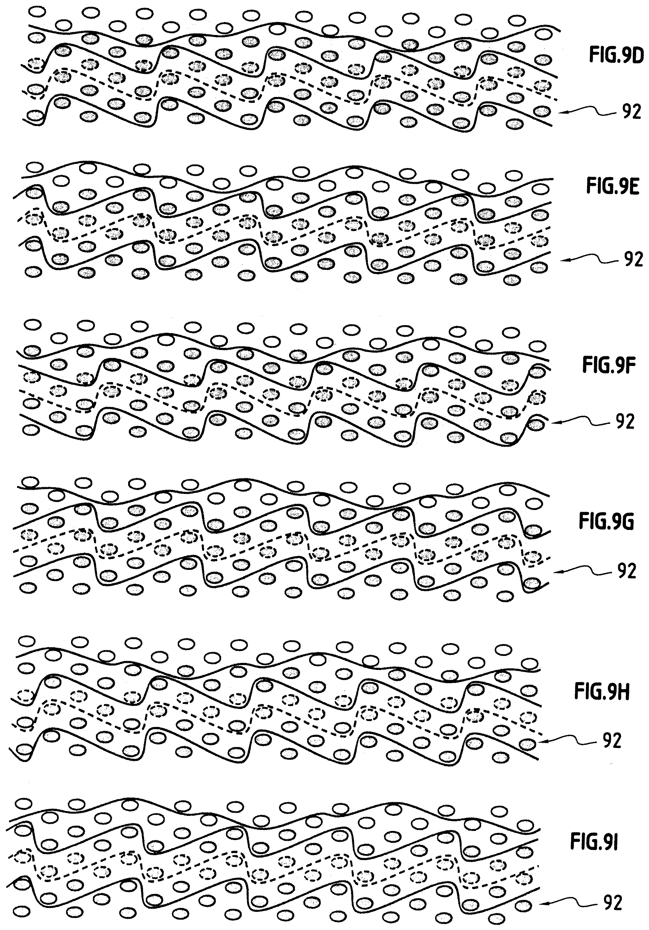

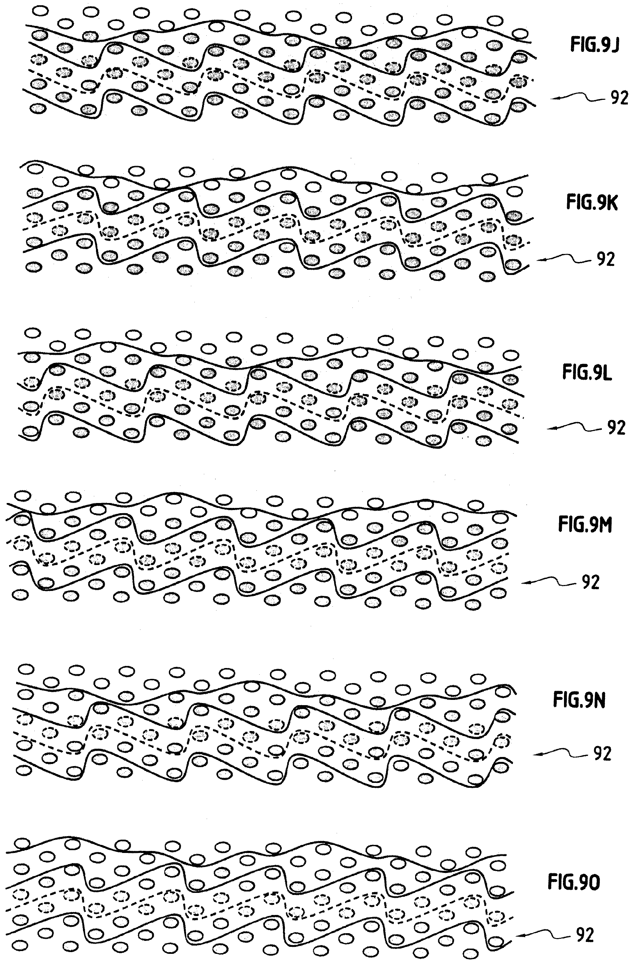

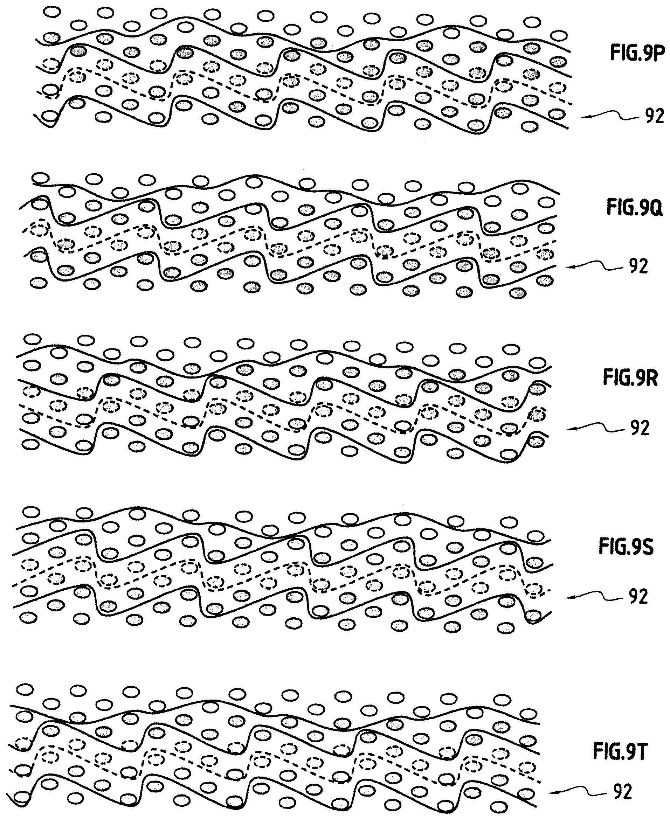

Les figures 9A à 9T représentent 20 plans successifs partiels d'une partie de coeur 92 d'une structure fibreuse obtenue par tissage 3D, les fils de trame étant disposés en quinconce.

La partie de coeur 92 comprend une première partie 92a tissée avec une première armure interlock sur deux demi-couches de fils de trame et une deuxième partie 92b tissée avec une deuxième armure interlock sur deux demi-couches de fils de trame. Dans la première partie 92a, le fil de chaîne représenté en tirets montre simplement qu'un ou plusieurs fils de chaîne peuvent être prévus suivant le même trajet en fonction de l'épaisseur souhaitée. Dans la deuxième partie 92b, un seul fil de chaîne est représenté. Celui-ci pourra être répété autant de fois que nécessaire en fonction de l'épaisseur souhaitée.

La deuxième partie 92b est située entre la première partie 92a et une partie de peau non représentée. Le tissage en peau pourra être un tissage multicouches par exemple avec une armure multi-satin comme la partie de peau 56 de la structure fibreuse de l'exemple 3.

Lorsque la partie de coeur 92 est située entre deux parties de peau opposées, elle pourra comprendre une troisième partie située entre la première partie et une partie de peau, de l'autre côté de la première partie par rapport à la deuxième partie 92a, par exemple symétrique de celle-ci par rapport à un plan médian.

L'utilisation de deux armures différentes dans la partie de coeur permet d'avoir des propriétés mécaniques différentes. Dans l'exemple illustré, l'armure interlock dans la partie 92a assure un plus fort liage des fils de trame que l'armure interlock dans la partie 92b.

### Exemple 7

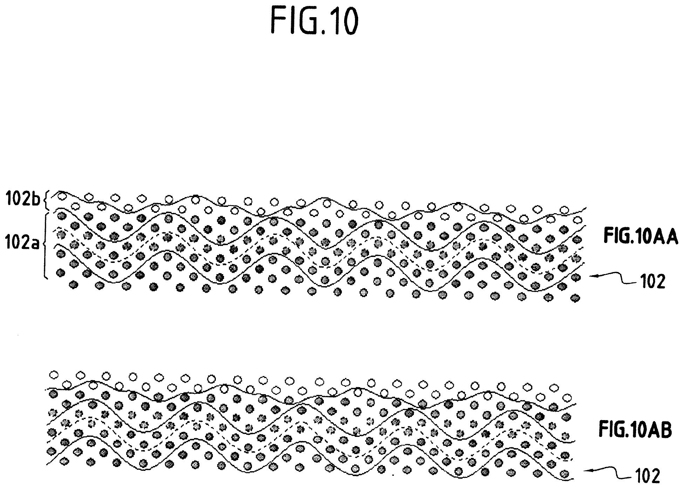

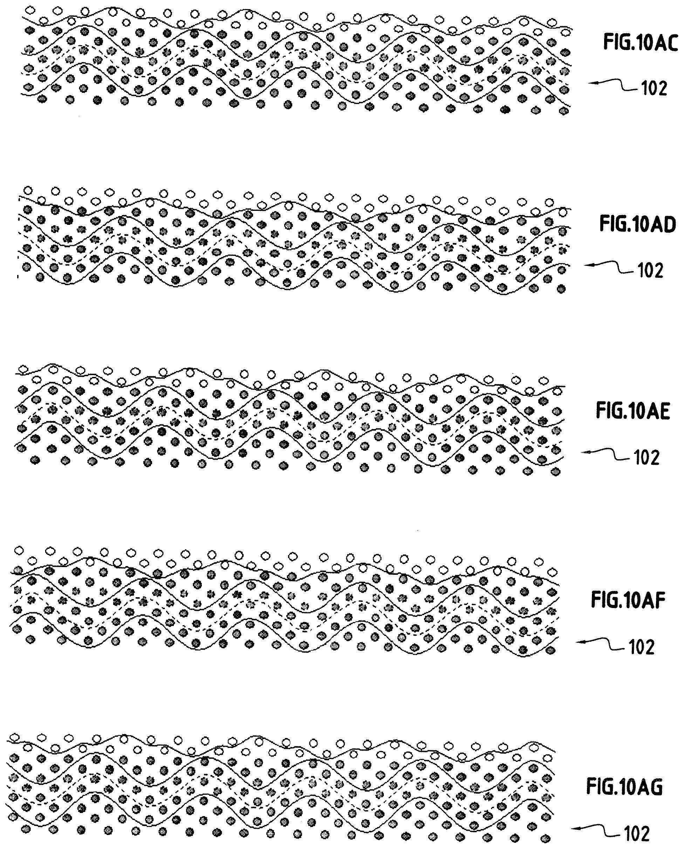

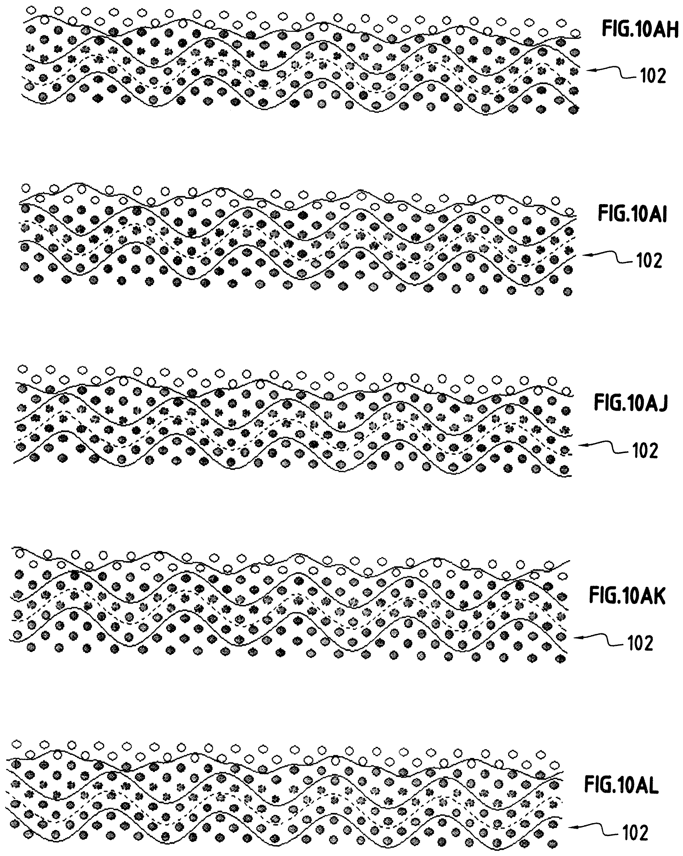

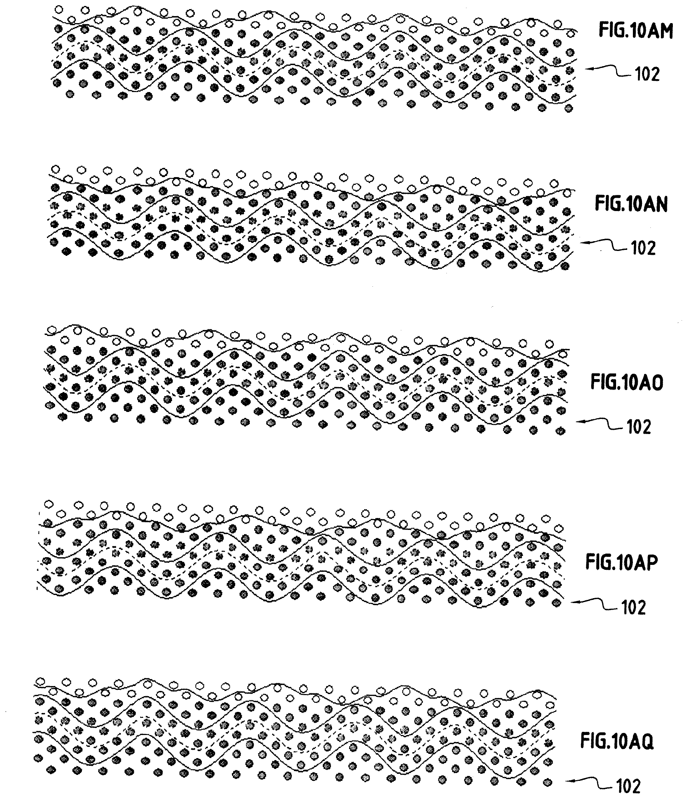

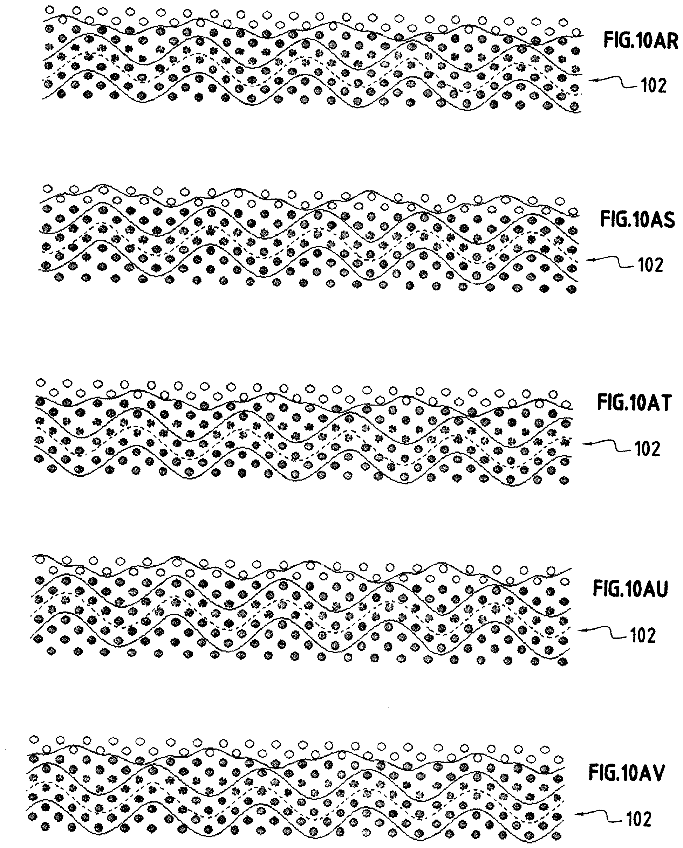

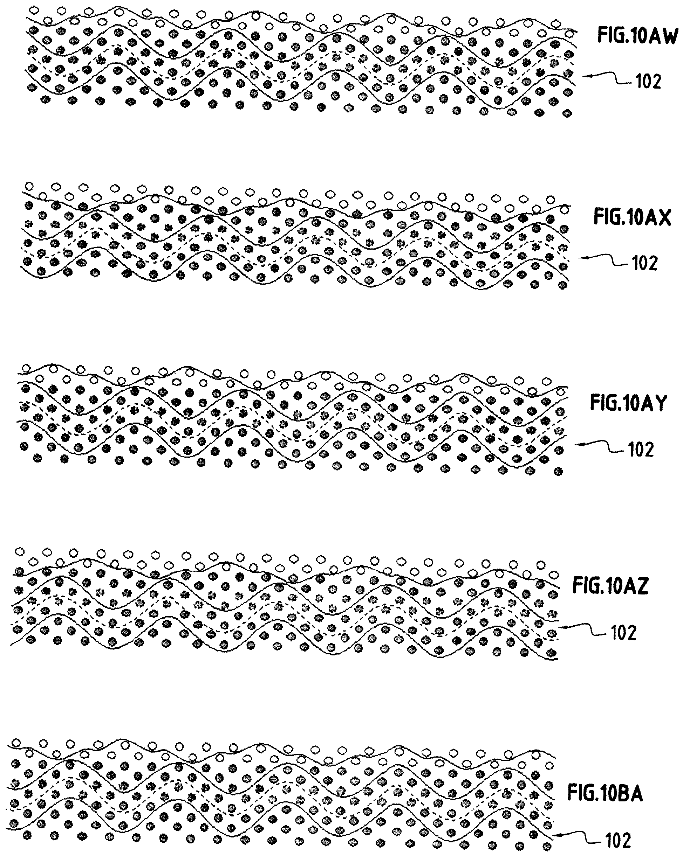

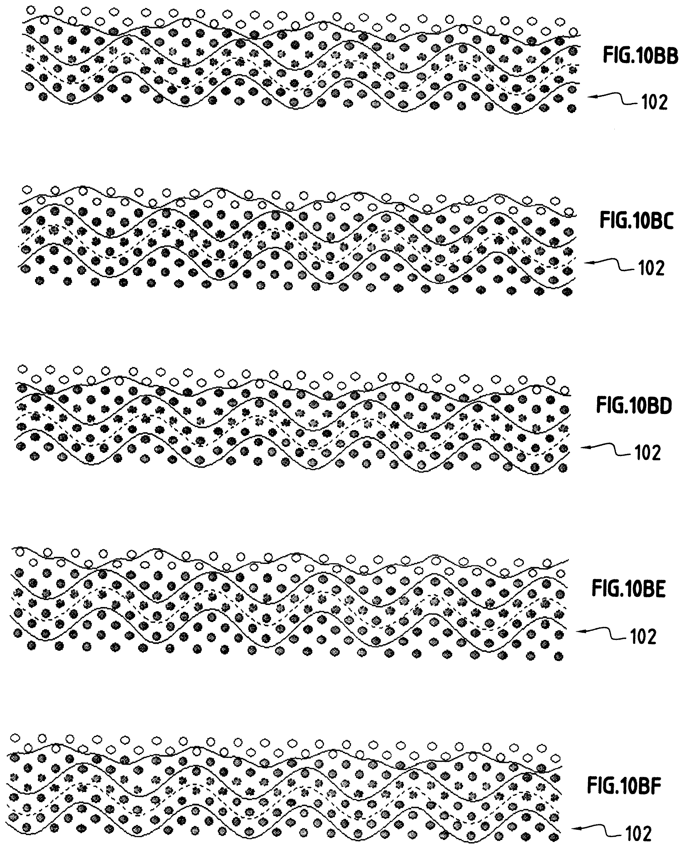

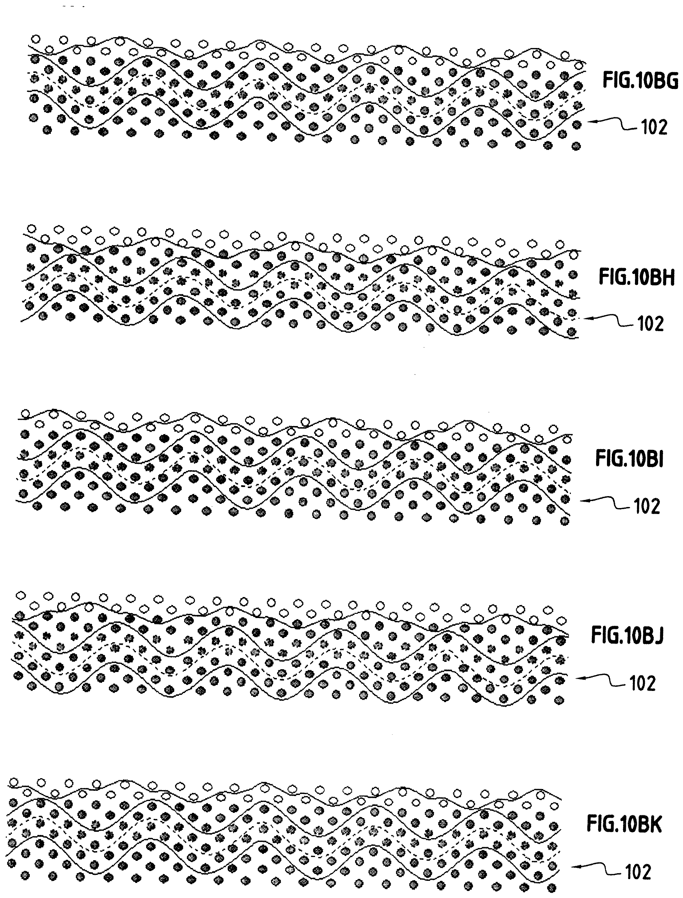

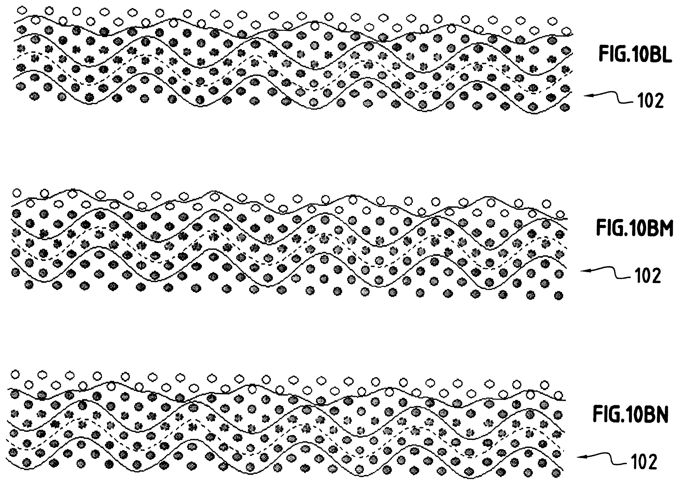

Les figures 10AA à 10BN représentent 40 plans successifs partiels d'une partie de coeur 102 d'une structure fibreuse obtenue par tissage 3D, la partie de coeur 102 se distinguant de celle 92 de l'exemple 6 par une armure de tissage interlock différente dans la première partie 102a, l'armure de tissage interlock dans une deuxième partie 102b étant la même que celle de la deuxième partie 92b de l'exemple 6.

L'armure interlock de la partie 102a procure un moins fort liage que celle de la partie 92a de l'exemple 6, mais est plus facile à tisser.

### Exemple 8

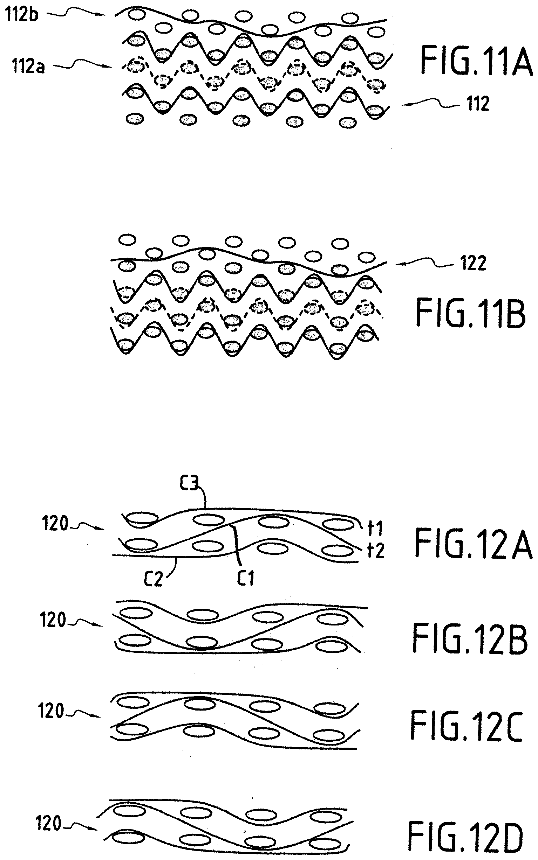

Les figures 11A et 11B représentent deux plans successifs partiels de la partie de coeur 112 d'une structure fibreuse qui se distingue de celle de l'exemple 6 en ce que l'armure dans la première partie 112a de la partie de coeur 112 est du type multi-toile, tandis que l'armure dans la deuxième partie 112b est de type interlock semblable à celle de la deuxième partie 92b de l'exemple 6.

Le tissage à armure multi-toile dans la partie 122a permet une très forte liaison des fils de trame.

### Exemple 9

Les figures 12A à 12D représentent des plans successifs d'une armure d'une partie 120 de structure fibreuse d'épaisseur très réduite, limitée à deux couches de fils de trame t1 et t2.

Les couches de trame sont liées entre elles par une chaîne C1 par tissage avec armure de type interlock tandis que les fils dans chaque trame sont liés par tissage avec armure bidimensionnelle par des chaînes respectives C2, C3. L'armure bidimensionnelle est de type satin. Une telle armure pourra convenir en particulier pour la partie d'une structure fibreuse correspondant à une partie très mince d'une pièce en matériau composite à fabriquer, par exemple pour la partie adjacente au bord de fuite d'une pale d'aube de turbomachine.

### Exemple 10

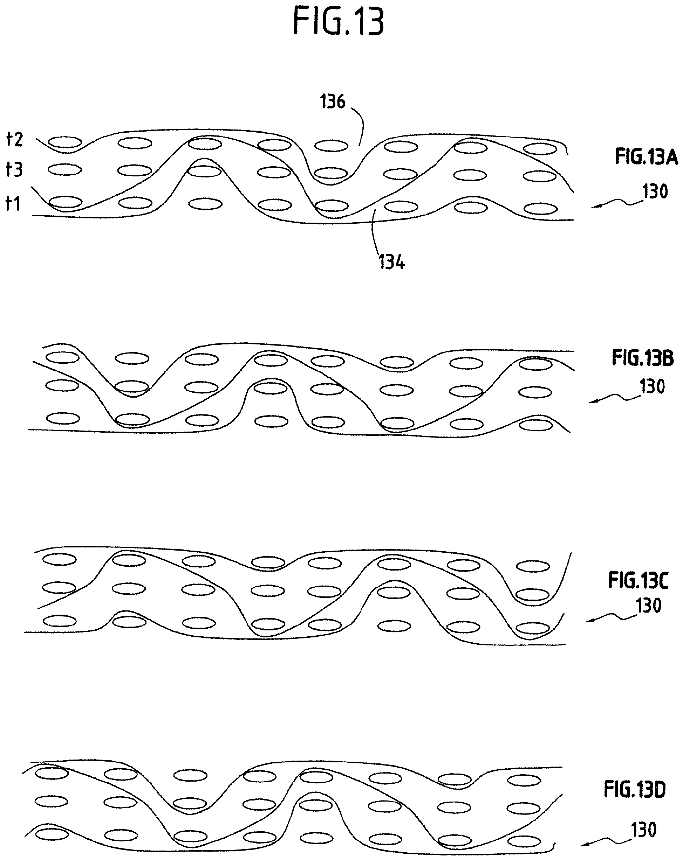

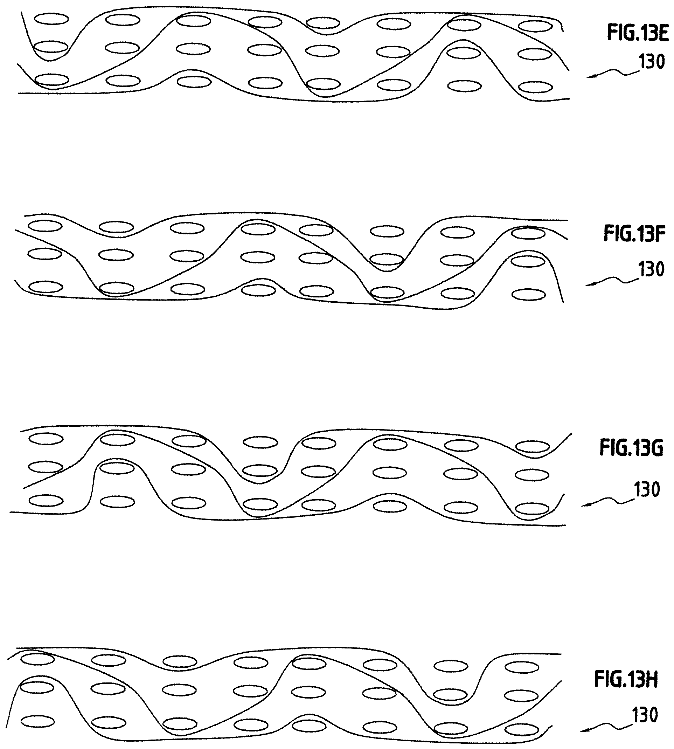

Les figures 13A à 13H représentent des plans successifs d'une armure d'une partie 130 de structure fibreuse d'épaisseur réduite, limitée à trois couches de fils de trame, à savoir des couches t1, t2 en peau et une couche intermédiaire t3 à coeur.

Les couches de trame sont liées entre elles par une chaîne par tissage avec armure de type interlock. Dans les peaux 134, 136 de la structure fibreuse 130, un tissage avec armure multi-satin est réalisé. En variante, on pourrait réaliser, en peau, un tissage bidimensionnel avec armure de type satin.

On notera que, dans les parties de structure fibreuse 120 et 130, les trames ne sont pas positionnées en quinconce, contrairement aux exemples précédents.

### Exemple 11

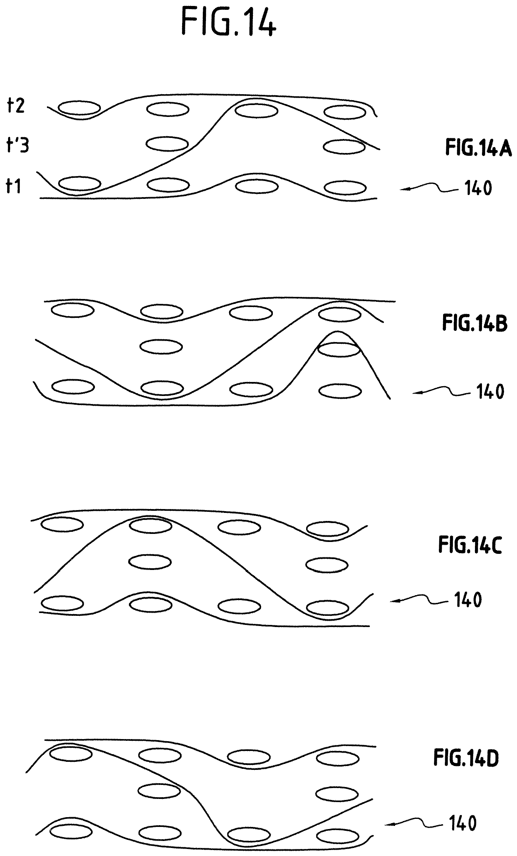

Les figures 14A à 14D représentent des plans successifs d'une partie 140 de structure fibreuse formant transition entre les parties 120 et 130 des exemples 9 et 10.

On retrouve dans la partie 140, les couches de fils de trame t1 et t2 et une couche intermédiaire partielle t'3, par exemple une couche contenant la moitié du nombre de fils de trame des couches t1 et t2.

La couche intermédiaire t'3 est liée aux couches t1, t2 par un tissage avec armure interlock, de façon semblable à l'armure du tissage interlock reliant les couches de trame de la partie 130.

En peau, au niveau des couches t1, t2, un tissage bidimensionnel est réalisé avec armure satin, semblable à celui réalisé au niveau de chaque couche t1, t2 dans la partie de structure fibreuse 120.

### Exemple 12

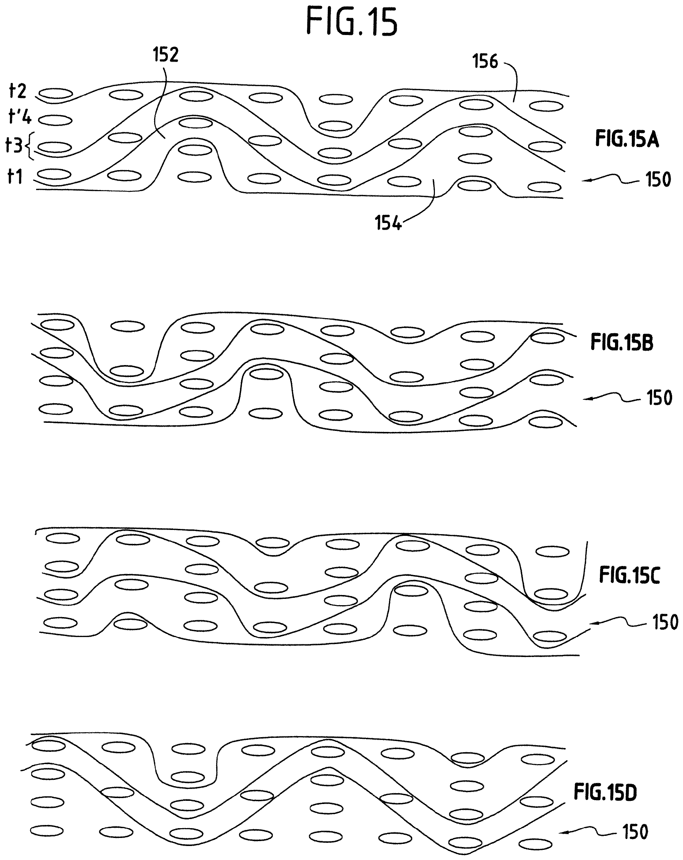

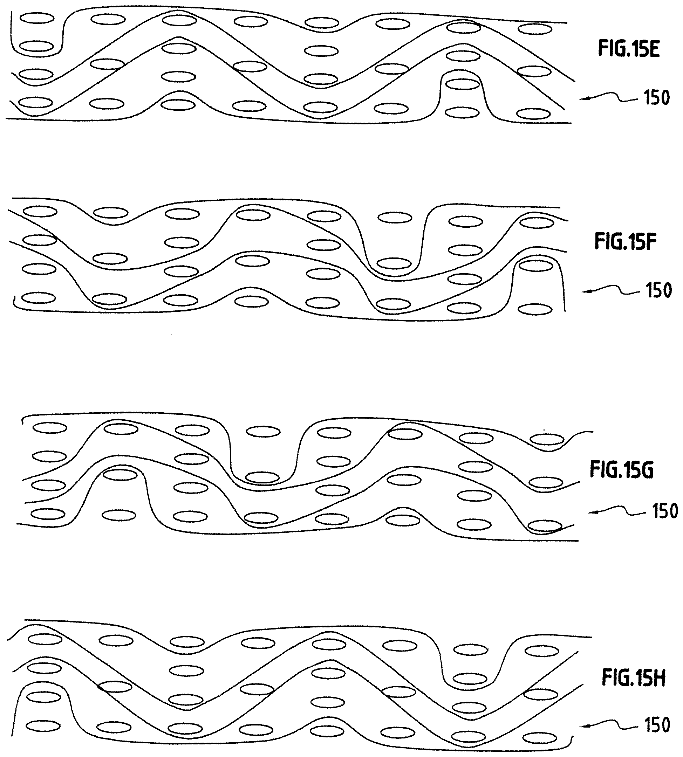

Les figures 15A à 15H représentent des plans successifs d'une partie 150 de structure fibreuse formant transition entre la partie 130 de l'exemple 10 et une partie ayant une épaisseur augmentée d'une couche.

On retrouve dans la partie 150 les couches de fils de trame t1 et t2, la couche intermédiaire t3 et une couche de trame additionnelle partielle t'4, par exemple une demi-couche, les fils de la couche t3 étant décalés d'une colonne de trame à l'autre pour former une disposition en quinconce.

Au coeur 152, les couches t3 et t'4 sont liées aux couches t1 et t2 par un tissage avec armure interlock. En peau 154, 156 au niveau des couches t1, t2, un tissage multicouches est réalisé, en l'espèce un tissage multi-satin du même type que celui réalisé en peau dans la partie de structure 60 des figures 7A à 7H.

Les armures des exemples 9 à 12 permettent d'augmenter progressivement l'épaisseur d'une structure fibreuse tout en permettant d'assurer une continuité de l'armure en peau. A cet effet, il est souhaitable de passer d'un plan P d'une armure au plan P+1 de l'armure suivante (modulo le nombre de plans de cette dernière). Par exemple, une augmentation d'épaisseur de la structure 120 à la structure 150 peut être progressivement obtenue par la succession suivante :
- plans 1, 2, 3 (Fig 12A, 12B, 12C) de l'armure de la structure 120,
- plans 4, 5, soit 4,1 (puisque 5 = 1 modulo 4) (Fig 14D, 14A) de l'armure de la structure de transition 140,
- plans 6, 7, 8 (Fig 13F, 13G, 13H) de l'armure 130, et
- plans 9, 10, 11, soit 1, 2, 3 (puisque 9, 10, 11 = 1, 2, 3 modulo 8) de l'armure de la structure de transition 150 (Figures 15A, 15B, 15C).

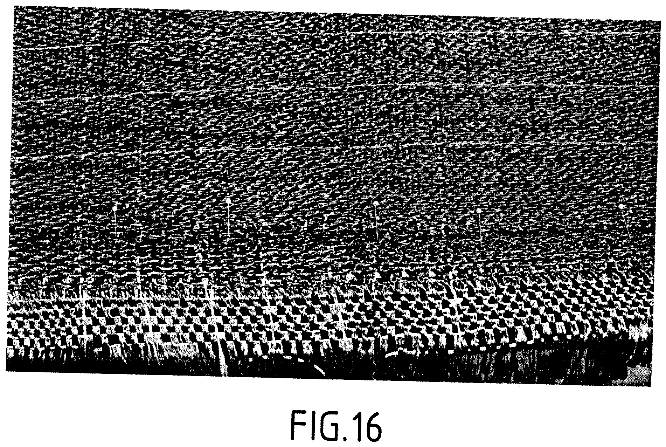

La photographie de la figure 16 montre une partie de structure fibreuse à épaisseur évolutive constituant une préforme fibreuse d'aube de soufflante de turbomachine. On constate que la continuité des armures en peau est respectée jusqu'au bord BF de la préforme correspondant au bord de fuite de la pale de l'aube. Le tissage de la partie mince est ici réalisé conformément aux exemples 9 à 12 (Figures 12 à 15).

## Revendications

1. Structure fibreuse de renfort tissée en une seule pièce pour la fabrication de pièce en matériau composite, la structure fibreuse ayant une partie interne, ou coeur (22, 52, 62, 72), et une partie adjacente à une surface extérieure de la structure, ou peau (24, 26, 56, 66, 74, 76), et la structure fibreuse étant formée par un tissage tridimensionnel à coeur avec au moins une armure interlock, et par un tissage en peau avec une armure différente de l'armure à coeur **caractérisée en ce que** le tissage en peau a une armure de type satin.

2. Structure fibreuse selon la revendication 1, dans laquelle le tissage en peau (56, 66) est de type multicouches.

3. Structure fibreuse selon la revendication 2, dans laquelle le tissage en peau (24, 26, 74, 76) est de type bidimensionnel.

4. Structure fibreuse selon l'une quelconque des revendications 1 à 3, dans laquelle le coeur comprend une première partie (92a) formée par tissage tridimensionnel avec une première armure et au moins une deuxième partie (92b) située entre la première partie et la peau, la deuxième partie étant formée par tissage tridimensionnel avec une deuxième armure différente de la première.

5. Structure fibreuse selon la revendication 4, dans laquelle la première et la deuxième armures sont des armures interlock.

6. Structure fibreuse selon la revendication 4, dans laquelle l'une des première et deuxième armures est une armure interlock et l'autre est une armure de tissage multicouches.

7. Structure fibreuse selon l'une quelconque des revendications 1 à 6, dans laquelle l'une au moins des contextures en chaîne et en trame varie entre le coeur et la peau.

8. Structure fibreuse selon la revendication 7 pour la fabrication de pièces en matériau composite par densification CVI, dans laquelle l'une au moins des contextures en chaîne et en trame est plus faible en peau qu'à coeur.

9. Structure fibreuse selon l'une quelconque des revendications 1 à 8, dans laquelle les fils utilisés pour le tissage ont un titre qui varie entre le coeur et la peau.

10. Structure fibreuse selon l'une quelconque des revendications 1 à 9, ayant au moins une partie d'épaisseur réduite avec deux couches de fils de trame et formée par un tissage tridimensionnel avec une armure de type interlock liant les deux couches de trame et par un tissage bidimensionnel à armure de type satin liant les fils de chaque couche de peau (134, 136).

11. Structure fibreuse selon l'une quelconque des revendications 1 à 10, ayant une partie d'épaisseur réduite avec trois couches (t1-t3) de fils de trame et formée par un tissage tridimensionnel avec une armure interlock liant les trois couches de trame et la couche (t2) de fils de trame centrale est en outre liée avec chacune des deux autres (t1, t3) par un tissage multicouches à armure de type satin.

12. Structure fibreuse selon l'une quelconque des revendications 1 à 11, ayant une partie de transition entre une première partie et une deuxième partie ayant une couche complète de fils de trame supplémentaire par rapport à la première partie, la partie de transition ayant une couche partielle supplémentaire de fils de trame par rapport à la première partie.

13. Structure fibreuse selon la revendication 12, dans laquelle les fils de trame de la couche partielle supplémentaire sont disposés entre deux couches complètes de fils de trame et liés à celles-ci par un tissage avec une armure interlock.

14. Pièce en matériau composite ayant un renfort fibreux densifié par une matrice résine, dans laquelle le renfort fibreux est formé par une structure fibreuse selon l'une quelconque des revendications 1 à 13.

15. Pièce selon la revendication 14, constituant une aube de turbomachine.

16. Pièce en matériau composite thermostructural ayant un renfort fibreux densifié par une matrice, dans laquelle le renfort fibreux est formé par une structure fibreuse selon l'une quelconque des revendications 1 à 13.

## Patentansprüche

1. Einstückig gewebte Verstärkungsfaserstruktur für die Herstellung eines Teils aus Verbundwerkstoff, wobei die Faserstruktur einen Innenteil, oder Kern (22, 52, 62, 72), und einen einer Außenfläche der Struktur benachbarten Teil, oder Außenhaut (24, 26, 56, 66, 74, 76), aufweist, und wobei die Faserstruktur durch ein dreidimensionales Kerngewebe mit wenigstens einer Interlock-Bindung und durch ein Außenhautgewebe mit einer Bindung, die von der Kern-Bindung verschieden ist, gebildet ist,
**dadurch gekennzeichnet, dass** das Außenhautgewebe eine Bindung vom Typ Satin hat.

2. Faserstruktur nach Anspruch 1, bei der das Außenhautgewebe (56, 66) vom mehrlagigen Typ ist.

3. Faserstruktur nach Anspruch 2, bei der das Außenhautgewebe (24, 26, 74, 76) vom zweidimensionalen Typ ist.

4. Faserstruktur nach einem der Ansprüche 1 bis 3, bei der der Kern einen ersten Teil (92a), der durch dreidimensionales Weben mit einer ersten Bindung gebildet ist, und wenigstens einen zweiten Teil (92b), der zwischen dem ersten Teil und der Außenhaut gelegen ist, umfasst, wobei der zweite Teil durch dreidimensionales Weben mit einer von der ersten verschiedenen zweiten Bindung gebildet ist.

5. Faserstruktur nach Anspruch 4, bei der die erste und die zweite Bindung Interlock-Bindungen sind.

6. Faserstruktur nach Anspruch 4, bei der eine der ersten und der zweiten Bindung eine Interlock-Bindung ist und die andere eine Mehrlagenwebbindung ist.

7. Faserstruktur nach einem der Ansprüche 1 bis 6, bei der wenigstens eine der Fadendichten in Kette und Schuss zwischen dem Kern und der Außenhaut variiert.

8. Faserstruktur nach Anspruch 7, für die Herstellung von Teilen aus Verbundwerkstoff durch CVI-Verdichtung, bei der wenigstens eine der Fadendichten in Kette und Schuss bei der Außenhaut geringer als beim Kern ist.

9. Faserstruktur nach einem der Ansprüche 1 bis 8, bei der die für das Weben verwendeten Fäden eine Nummer aufweisen, die zwischen dem Kern und der Außenhaut variiert.

10. Faserstruktur nach einem der Ansprüche 1 bis 9, mit wenigstens einem Teil mit reduzierter Dicke mit zwei Schussfadenlagen, der durch ein dreidimensionales Gewebe mit einer Bindung vom Typ Interlock, welches die beiden Schusslagen verbindet, und durch ein zweidimensionales Gewebe mit einer Bindung vom Typ Satin, welches die Fäden einer jeden Außenhautlage (134, 136) verbindet, gebildet ist.

11. Faserstruktur nach einem der Ansprüche 1 bis 10, mit einem Teil mit reduzierter Dicke mit drei Schussfadenlagen, der durch ein dreidimensionales Gewebe mit einer Interlock-Bindung, welches die drei Schusslagen verbindet, gebildet ist, und die mittlere Schussfadenlage (t2) ist ferner mit einer jeden der beiden anderen (t1, t3) durch ein mehrlagiges Gewebe mit einer Bindung vom Typ Satin verbunden.

12. Faserstruktur nach einem der Ansprüche 1 bis 11, mit einem Übergangsteil zwischen einem ersten Teil und einem zweiten Teil, der eine zusätzliche vollständige Schussfadenlage im Vergleich zu dem ersten Teil aufweist, wobei der Übergangsteil eine zusätzliche Schussfadenteillage im Vergleich zu dem ersten Teil aufweist.

13. Faserstruktur nach Anspruch 12, bei der die Schussfäden der zusätzlichen Teillage zwischen zwei vollständigen Schussfadenlagen angeordnet sind und mit diesen durch ein Gewebe mit einer Interlock-Bindung verbunden sind.

14. Teil aus Verbundwerkstoff mit einer durch eine Harzmatrix verdichteten Faserverstärkung, bei dem die Faserverstärkung durch eine Faserstruktur nach einem der Ansprüche 1 bis 13 gebildet ist.

15. Teil nach Anspruch 14, das eine Schaufel einer Turbomaschine bildet.

16. Teil aus hochtemperaturbeständigem Verbundwerkstoff, mit einer durch eine Matrix verdichteten Faserverstärkung, bei dem die Faserverstärkung durch eine Faserstruktur nach einem der Ansprüche 1 bis 13 gebildet ist.

## Claims

1. A reinforcing fiber structure woven as a single piece for fabricating a composite material part, the fiber structure having an internal portion, or core (22, 52, 62, 72), and a portion adjacent to an outside surface of the structure, or skin (24, 26, 56, 66, 74, 76), and the fiber structure being formed by a three-dimensional weaving in its core using at least an interlock weave, and by weaving at its skin with a weave that is different from the weave in the core, **characterized in that** the weaving at its skin has a satin type weave.

2. A fiber structure according to claim 1, in which the skin (56, 66) weave is of multilayer type.

3. A fiber structure according to claim 2, in which the skin (24, 26, 74, 76) weave is of two-dimensional type.

4. A fiber structure according to any one of claims 1 to 3, in which the core comprises a first portion (92a) formed by three-dimensional weaving with a first weave and at least one second portion (92b) situated between the first portion and the skin, the second portion being formed by three-dimensional weaving with a second weave different from the first.

5. A fiber structure according to claim 4, in which the first and second weaves are interlock weaves.

6. A fiber structure according to claim 4, in which one of the first and second weaves is an interlock weave and the other is a multilayer weave.

7. A fiber structure according to any one of claims 1 to 6, in which at least one of the warp and weft counts varies between the core and the skin.

8. A fiber structure according to claim 7 for fabricating composite material parts by CVI densification, in which at least one of the warp and weft counts is smaller at the skin than in the core.

9. A fiber structure according to any one of claims 1 to 8, in which the yarns used for weaving are of caliber that varies between the core and the skin.

10. A fiber structure according to any one of claims 1 to 9, having at least a portion of reduced thickness with two layers of weft yarns and formed by three-dimensional weaving with an interlock type weave bonding together the two weft layers and by a two-dimensional weave bonding together the yarns in each skin (134, 136) layer.

11. A fiber structure according to any one of claims 1 to 10, having a reduced-thickness fiber with three layers (t1-t3) of weft yarns and formed by three-dimensional weaving with an interlock weave bonding together the three weft layers, and the central layer (t2) of weft yarns is also bonded with each of the other two (t1, t3) layers by multilayer weaving with a satin type weave.

12. A fiber structure according to any one of claims 1 to 11, having a transition portion between a first portion and a second portion having a complete layer of weft yarns that is additional compared with the first portion, the transition portion having a partial layer of weft yarns that is additional compared with the first portion.

13. A fiber structure according to claim 12, in which the weft yarns of the additional partial layer are disposed between two complete layers of weft yarns and are bonded thereto by weaving with an interlock weave.

14. A composite material part having fiber reinforcement densified by a resin matrix, in which the fiber reinforcement is formed by a fiber structure according to any one of claims 1 to 13.

15. A part according to claim 14, constituting a turbomachine blade.

16. A thermostructural composite material part having fiber reinforcement densified by a matrix, in which the fiber reinforcement is formed by a fiber structure according to any one of claims 1 to 13.
